# EUROPEAN PATENT SPECIFICATION

(11) **EP 0 783 550 B1**
(45) Date of publication and mention of the grant of the patent: **28.07.1999**
(21) Application number: 95930285.2
(22) Date of filing: 25.08.1995
(51) Int. Cl.: C09J 5/08, C08F 283/10, C09J 151/08

(54) **EXPANDABLE MULTILAYER MATERIAL**
EXPANDIERBARES, MEHRSCHICHTIGES MATERIAL
MATERIAU MULTICOUCHE EXPANSIBLE

(30) Priority: 29.09.1994 US 314872
(43) Date of publication of application: 16.07.1997
(73) Proprietor: MINNESOTA MINING AND MANUFACTURING COMPANY, St. Paul, Minnesota 55133-3427 (US)
(72) Inventor: JOHNSON, Michael, A., Saint Paul, MN 55133-3427 (US); TUMEY, Michael, L., Saint Paul, MN 55133-3427 (US); WILLETT, Peggy, S., Saint Paul, MN 55133-3427 (US); GEORGE, Clayton, A., Saint Paul, MN 55133-3427 (US); MEYER, Scott, R., Saint Paul, MN 55133-3427 (US); KITANO, Shuichi, Saint Paul, MN 55133-3427 (US); OGATA, Kiyoshi, Saint Paul, MN 55133-3427 (US); SATO, Shinobu, Saint Paul, MN 55133-3427 (US); SHINOZAKI, Kotaroh, Saint Paul, MN 55133-3427 (US)
(74) Representative: Warcoin, Jacques
(86) International application number: US9510843
(87) International publication number: WO9610059

(56) References cited:
- EP-A- 0 114 733
- FR-A- 2 117 370
- GB-A- 2 165 910
- US-A- 3 842 059
- US-A- 5 151 327
- DATABASE WPI Week 9323, 7 May 1993 Derwent Publications Ltd., London, GB; AN 93-185056 'Reinforcement sheet material of panel and vehicle exterior panel structure.' & JP,A,5 111 973 (NIPPON ZEON K. K.)

## Description

### Field of the Invention

This invention relates to a melt-flowable sheet material and a method for using the same.

### Background of the Invention

U.S. Patent No. 5,086,088 discloses a latent, thermosettable pressure-sensitive adhesive composition comprising an acrylate pressure-sensitive adhesive and an epoxy resin component which provides for the thermoset cure. The adhesive composition is disclosed as being useful to fasten roof molding to a car body.

JP-A-5111973 discloses a panel reinforcing sheet material constituted by laminating a first layer containing an epoxy resin (A), a rubber elastomer and/or a powdery thermoplastic resin containing no halogen atom in its molecule (B), a heat activating type curing agent (C) for an epoxy resin, a neutral or alkaline inorganic filler (D) and, if desired, a plasticizer (E); a second layer composed of a foamable composition containing the components (A)- (E) as essential components and further containing a high temperature decomposition type foaming agent; a third layer composed of fiber cloth; and a fourth layer composed of a metal membrane with a thickness of 50 microns for less if desired.

### Brief Summary of the Present Invention

The instant invention provides a latent, thermosettable, melt-flowable sheet material having a top surface and a bottom surface and comprising two or more layers. The sheet material comprises an upper layer and a lower layer, the upper layer comprising a latent, thermosettable, melt-flowable composition, and the lower layer comprising a latent, expandable, thermosettable, melt-flowable composition, wherein upon application of the sheet material to a substrate by contacting the lower layer therewith, and heating, the lower layer which flows and expands and
the upper layer which flows and wherein one of said upper and lower layers comprises a copolymerizable macromonomer of formula:

(I) X-(Y)ₙ-Z

wherein
X is a vinyl group copolymerizable with an alkyl acrylate and reinforcing monomers ;
Y is a divalent linking group where n can be zero or one, and
Z is a monovalent polymeric moiety having a Tg greater than 20°C.

According to one embodiment the upper layer comprises a copolymerizable macromonomer.

According to one embodiment, the lower layer comprises a copolymerizable macromonomer.

Preferably, the upper layer flows laterally such that the lower layer is essentially encapsulated by the substrate and the upper layer.

The latent, thermosettable, melt-flowable sheet material of the invention finds particular utility in providing topographical and/or protective features to primed or unprimed metal automobile parts or bodies to seal joints formed by such metal parts. The flowability and expandability of the lower layer provides for optimum sealing of such joints. The flowability of the upper layer provides for an aesthetically-pleasing surface which may be, for example, painted.

### Brief Description of the Drawings

The invention will now be described in greater detail with reference to the accompanying drawings, in which:
FIG. 1 is an end view of a sheet material of the invention prior to thermosetting or cure situated in an automobile roof ditch;
FIG. 2 is an end view of the sheet material shown in FIG. 1 subsequent to thermosetting or cure;
FIG. 3 is an end view of a sheet material of the invention prior to thermosetting or cure situated in an automobile roof ditch; and
FIG. 4 is an end view of the sheet material shown in FIG. 1 subsequent to thermosetting or cure.

### Detailed Description of the Invention

The latent, thermosettable, melt-flowable sheet material of the present invention comprises at least two layers of latent, thermosettable, melt-flowable compositions (i.e., the "upper layer" and the "lower layer"). By "melt-flowable" is meant that, on heating, the composition exhibits viscous flow resulting in an irreversible bulk deformation of the composition. The preferred melt-flowable composition for the lower layer may also exhibit pressure-sensitive adhesive properties. The melt-flowable composition for the upper layer may also, if desired, exhibit pressure-sensitive adhesive properties. By "pressure-sensitive adhesive" is meant that the sheet material exhibits pressure-sensitive adhesive properties at the application or cure temperature at which the sheet material is being exposed to. Generally, the temperature will be between ambient-temperature and 204°C. It is presently preferred that the adhesive exhibit pressure-sensitive properties at ambient temperature such as 22°C.

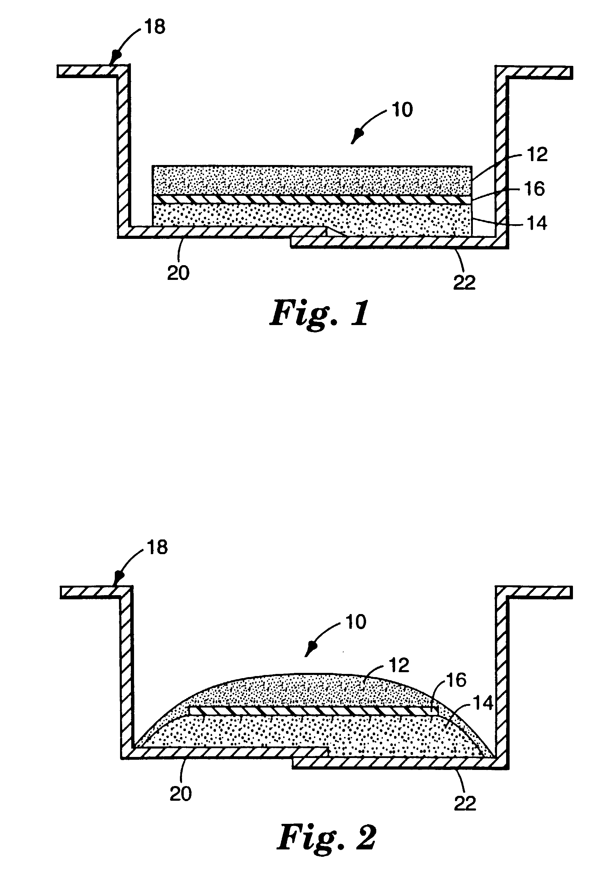

Referring to the drawings, there is shown in FIG. 1 sheet material 10 comprising upper layer 12, ) lower layer 14 and polymeric film 16 therebetween. Sheet material 10 is situated in and adhered to roof ditch 18 which is formed by adjoining panels 20 and 22. After thermosetting by heating to an elevated temperature, lower layer 14 has expanded and upper layer 12 has flowed such that lower layer 14 is essentially encapsulated by upper layer 12 and roof ditch 18 as shown in FIG. 2.

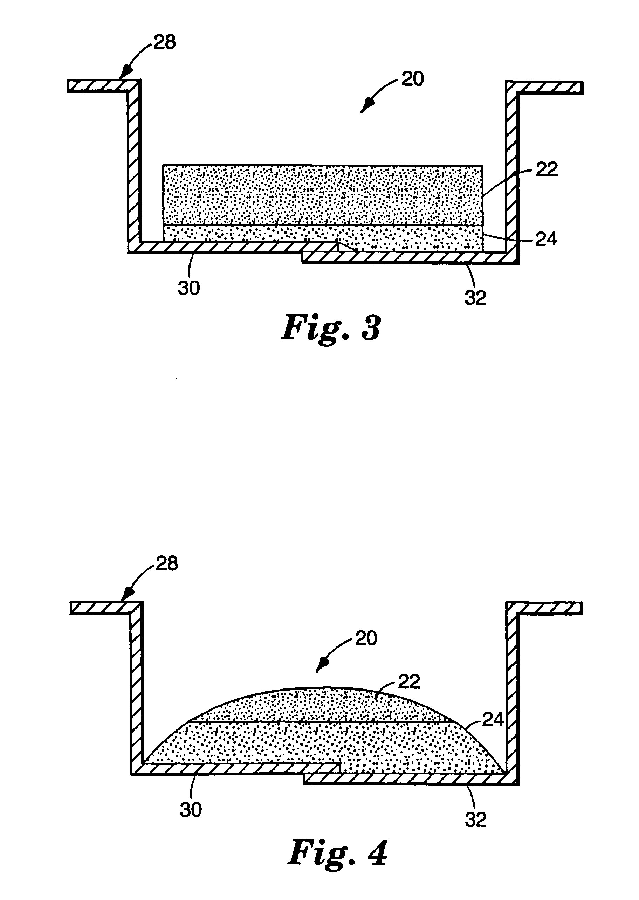

Referring to the drawings, there is shown in FIG. 3 sheet material 20 comprising upper layer 22 and lower layer 24. Sheet material 20 is situated in and adhered to roof ditch 28 which is formed by adjoining panels 30 and 32. After thermosetting by heating to an elevated temperature, lower layer 24 has expanded and upper layer 22 has floved. In this case, lower layer 24 is not essentially encapsulated by upper layer 22 and roof ditch 28 as shown in FIG. 4.

The thermosettable, melt-flowing compositions used in both the upper layer and lower layer preferably comprise the photochemical reaction products of starting materials comprising (i) a prepolymeric (i.e., partially polymerized to a viscous syrup typically between 10⁻¹ Pa.s to 10 Pa.s (100 to 10,000 centipoises)) or monomeric syrup comprising an acrylic or methacrylic acid ester; (ii) an epoxy resin; (iii) a photoinitiator; and (iv) a heat-activatable hardener for the epoxy resin. The composition employed in preparing the upper layer also preferably includes an acrylate copolymer as will be discussed below. The composition employed in preparing the lower layer which is capable of expanding on heating additionally includes a blowing or foaming agent or expandable spheres. All such compositions may be coated and polymerized conveniently in a variety of thicknesses including relatively thick sections.

The photopolymerizable prepolymeric or monomeric syrup used in the compositions for preparing both the upper layer and the lower layer contains an acrylic or methacrylic ester and optionally a copolymerizable reinforcing comonomer. The acrylic or methacrylic ester is a monofunctional acrylic or methacrylic ester of a non-tertiary alcohol, having from 4 to 12 carbon atoms in the alcohol moiety. Included in this class of esters are n-butyl acrylate, hexyl acrylate, 2-ethylhexyl acrylate, octyl acrylate, isooctyl acrylate, decyl acrylate and dodecyl acrylate. Mixtures of esters may be employed.

The copolymerizable reinforcing monomer, if employed, is preferably selected from the group consisting of monomers such as isobornyl acrylate, N-vinyl pyrrolidone, N-vinyl caprolactam, N-vinyl piperidine, N,N-dimethylacrylamide, and acrylonitrile. Preferred reinforcing monomers are nitrogen-containing such as those nitrogen-containing monomers listed above. The reinforcing monomer will generally be selected such that a homopolymer prepared therefrom will have a glass transition higher than a homopolymer prepared from the acrylic or methacrylic ester employed. Small amounts of copolymerizable acids such as acrylic acid may be included as long as they do not deleteriously affect the curing of the epoxy. Acrylic acid can be used in amounts up to 2 parts acrylic acid to 100 parts of acrylic ester monomer.

In the event that the prepolymeric or monomeric syrup comprises both an acrylic or methacrylic ester and a reinforcing comonomer, the acrylic or methacrylic ester will generally be present in an amount of 50 to 95 parts by weight, and the reinforcing comonomer will be present in a corresponding amount of 50 to 5 parts by weight. One skilled in the art will be able to vary the nature and amount of the reinforcing monomer to obtain the properties desired.

Further, both the photopolymerizable acrylic or methacrylic prepolymer or monomeric syrup and the photopolymerized polymer form a stable mixture with the epoxy resin.

As indicated above, the composition employed in preparing the upper layer also preferably includes an acrylate copolymer which contributes to handling properties prior to thermosetting cure and the hardness of that layer when it is fully cured while, at the same time, not detracting from the flowability of that layer upon heating to effect the cure. Preferably, the acrylate copolymer has a Tg above 22°C. Suitable acrylate copolymers include isobutylmethacrylate polymer, polyethylmethacrylate copolymer, methyl methacrylate copolymer, and the two methylmethacrylate/butylmethacrylate copolymers sold by Rohm & Haas under the tradenames Acryloid®B-67, B-72, B-82, B-60 and B-66, respectively. The amount of any such acrylate copolymer employed preferably will be 5 to 100 parts by weight per 100 parts by weight of the prepolymeric or monomeric syrup. The acrylate copolymer can also be added to the lower layer.

Polyacetal polymers can also be added to the compositions of either the upper layer or the lower layer to increase the modulus of the cured composition before thermosetting, as well as enhance the adhesion of paint to the sheet. A preferred type of polyacetal polymer is poly(vinylbutyral). The poly(vinylbutyral) should have sufficient hydroxyl functionality to be soluble in acrylate monomers. Hydroxyl functionalities between 9% and 13% have been found to be useful. The poly(vinylbutyral) is typically used in amounts from 10 to 120 parts per 100 parts of acrylate, and preferably used in amounts from 20 to 80 parts per 100 parts of acrylate. Addition of higher amounts of poly(vinylbutyral) can be used to reduce or eliminate the tackiness of the sheet material so that the sheet material is easier to handle.

Poly(vinylbutyral) resins are sold by Monsanto under the trademark BUTVAR™ in various grades having different molecular weights.

Other additives useful to modify the flow properties and to improve the handling properties of the sheet include polyester polymers which may be added to either the upper or lower layer. The polymers are typically added to the upper layer. The amount of polyester polymer that can be used is limited by the amount polymer that is soluble in the acrylate monomer or syrup. Amounts up to 20 parts of polyester polymer per 100 parts of acrylate monomer have been found to be useful. Preferred polyester polymers are those having carboxyl or hydroxyl terminal groups, and a number average molecular weight between 7500 and 200,000, more preferably between 10,000 and 50,000, and most preferably between 15,000 and 30,000. It is preferred that the polyesters are also linear, saturated, and semi-crystalline. Suitable polyesters are commercially available from Hüls America, Inc. under the Dynapol trademark with the following product numbers S1402, S1358, S1227, S1229, S1359, and S1401.

Another useful class of polyesters are polycaprolactones, which may be added to either layer. They are particularly useful in the upper layer to enhance flow properties and improve adhesion of paint to the sheet. The polycaprolactones can be used in the same amounts as the polyester polymers. Useful polycaprolactones include those described in U.S. Pat. No. 3,169,945. Preferred polycaprolactone polyols can be represented by the following structure:

HO-[(CH₂)₅-C(=O)-O]ₙ-R-[-O-C(=O)-(CH₂)₅]ₙ-OH

wherein
R is a divalent alkylene radical, and
n is approximately 2 to 200.
Useful polycaprolactone diols and polymers are commercially available from Union Carbide, Inc. under the TONE trademark.

It may be desirable to employ glycidyl methacrylate, glycidyl acrylate, or another epoxy functional monomer together with the acrylic or methacrylic ester and reinforcing monomer, if employed. Such an epoxy-functional monomer, if employed, will preferably be present in an amount of 0.1 to 10 parts per 100 parts by weight of all monomers used.

Another epoxy functional oligomer useful as a reinforcing or cross-linking species is the epoxy adduct of 2-isocyanotoethylmethacrylate and diglycidyl ether of bisphenol A. If used, the adduct can be used in amounts up to 100 parts of adduct per 100 parts of acrylate and preferably from 1 part to 30 parts per 100 parts of acrylate.

The reinforcement of the cured composition may also be effected by the use of silanes which have an organofunctional group capable of reacting with an epoxy group or a vinyl group, and a silane functional group which can react with silanol groups at the surface of suitable inorganic fillers. If used, silanes can be used in amounts of from 0.01 part to 10 parts per 100 parts acrylate, and preferably from 0.1 part to 5 parts.

Silanes are commercially available from a number of different suppliers, including Hüls America, Inc. Mixtures of silanes can also be used. In a useful embodiment, a mixture of two silanes having different functional groups can be used. For example, a first silane can contain a functional group that is selectively reactive with epoxy groups and a second silane that is reactive with acrylates. A silica containing filler can then serve as a bridging agent to connect the epoxy and acrylate phases of the thermosettable pressure sensitive adhesive. Commercially available silanes that can function in this manner are Hüls G6720 (epoxy silane) and Hüls M8550 (methacrylate silane), both available from Hüls America, Inc. A 1:1 weight ratio is useful, although the amount of each silane could be adjusted for the ratio of the acrylate moiety to the epoxy moiety.

Crosslinking agents for only the acrylate phase can be added to increase the stiffness of the sheet material to facilitate handling. Useful crosslinking agents are those that are free-radically polymerizable with acrylate monomers such as divinyl ethers and multi-functional acrylates. Examples of multi-functional acrylates include 1,6-hexanediol diacrylate, tri-methylol-propane triacrylate, pentaerythritol tetracrylate, and 1,2-ethylene glycol diacrylate. The acrylate crosslinking agent should not impede the flow and/or expansion of either the upper or lower layer. Amounts up to about 1 part per 100 parts acrylate can be used, and 0.1 to 0.2 part is preferred.

The stiffness of the tapes is, also increased by the addition of at least one copolymerizable macromonomer to compositions for the weatherable layer, the expandable layer, or both. The useful copolymerizable macromonomer is a polymeric moiety having a vinyl group which will copolymerize with the alkyl (meth)acrylate monomer, and if included, the reinforcing monomer (e.g., isoborynyl acrylate). The macromonomer is represented by the general formula

(I) X-(Y)ₙ-Z

wherein
X is a vinyl group copolymerizable with a alkyl acrylate and reinforcing monomers;
Y is a divalent linking group where n can be zero or one, and
Z is a monovalent polymeric moiety having a T_{g} greater than 20°C, and a molecular weight in the range of 2,000 to 30,000 and being essentially unreactive under copolymerization conditions. The preferred macromonomer is further defined as having an X group with the general formula 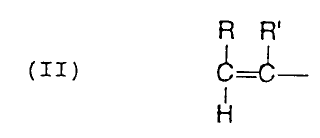
wherein R is a hydrogen atom or a COOH group and R' is a hydrogen atom or methyl group. The double bond between the carbon atoms provides a moiety capable of copolymerizing with the alkyl acrylate and reinforcing monomers.

The preferred macromonomer includes a Z group which has the formula 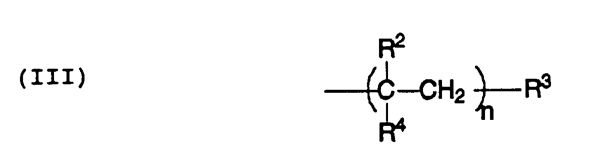 herein R² is a hydrogen atom or a lower alkyl group, R³ is a lower alkyl group, n is an integer from 20 to 500, and R⁴ is a monovalent radical selected from the group consisting of 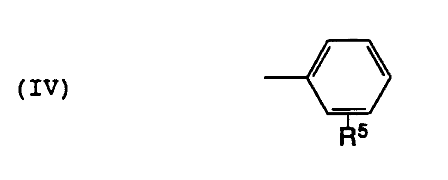 wherein R⁵ is a hydrogen atom or a lower alkyl group, and -CO₂R⁶ wherein R⁶ is a lower alkyl group.

Preferably, the macromonomer has the general formula selected from the group consisting of: 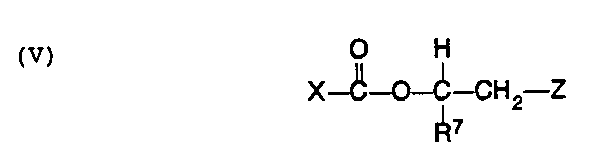 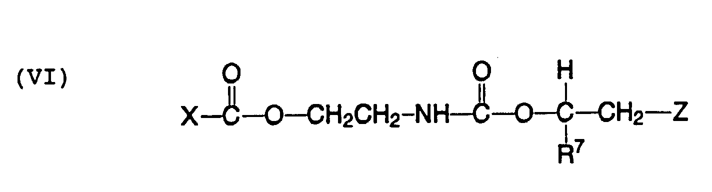 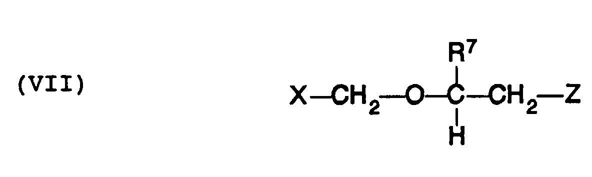 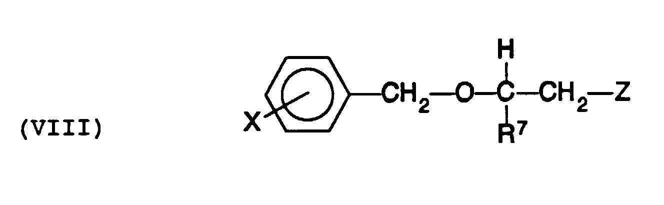 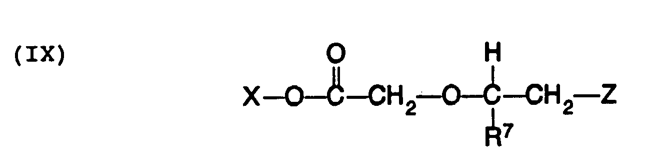 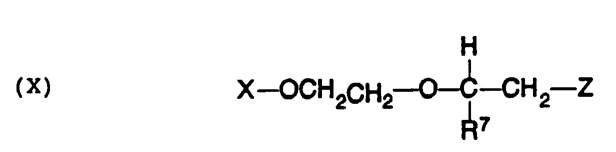 wherein R⁷ is a hydrogen atom or a lower alkyl group.

The vinyl-terminated polymeric macromonomers are known and may be prepared by the method disclosed in U. S. Patent Nos. 3,786,116 and 3,842,059 (Milkovich, et al). Macromonomers are also available commercially, for example, RC13K styrene macromonomer from Sartomer.

The amount of macromonomer that is useful varies from 2% to 20% by weight of the base acrylate composition consisting of the acrylate monomer, the reinforcing monomer, and the macromonomer. Higher amounts of macromonomer can be used but the cost could be prohibitive. Preferably, the amount of macromonomer is 3-15%, and more preferably, from 4-12%.

In order to provide a sheet material exhibiting the desired flow characteristics in response to heating, it may be desirable to include a chain transfer agent in the starting materials used for preparing the thermosettable pressure sensitive adhesive. Such inclusion facilitates a lower molecular weight acrylic polymer.

Chain transfer agents are generally known and include halogenated hydrocarbons such as carbon tetrabromide, and sulfur compounds such as lauryl mercaptan, butyl mercaptan, ethanethiol, and 2-mercaptoether.

The chain transfer agents can also be polymeric or oligomeric in nature such as those polymers and macromonomers described in U. S. Patent Nos. 4,746,713, 5,028,677, 5,264,530, and 5,290,633. In particular, the macromonomers are described in U. S. Patent No. 5,264,530. Commercially available macromonomers that can function as a chain transfer agent include those sold under the Elvacite™tradename by ICI.

The compositions may further include acrylic resins which have been observed to improve the flow properties. Such acrylic resins are commercially available, for example, by the tradename ISOCRYL EP-550 acrylic resin (Estron Chemical, Inc.) and SCX 8008 acrylic resin (Johnson Wax Specialty Chemical).

Useful epoxy resins for both the upper layer and lower layer may be selected from the group of compounds that contain an average of more than one, and preferably at least two, epoxy groups per molecule. The epoxy resin preferably is either liquid or a semiliquid at room temperature. Most preferred epoxy resins for the upper layer are liquid at room temperature to provide the desired level of flowability of the upper layer upon heating during the curing process. Representative examples of suitable epoxies for both the lower layer and the upper layer include phenolic epoxy resins, bisphenol epoxy resins, hydrogenated epoxy resins, aliphatic epoxy resins, halogenated bisphenol epoxy resins, and novalac epoxies. Mixtures of epoxy resins may be employed.

Preferred epoxy resins for the lower layer include bisphenol epoxies with the most preferred epoxy resin being the diglycidyl ether of bisphenol-A, formed by reaction of bisphenol-A with epichlorohydrin.

Examples of preferred liquid epoxies for the upper layer include hydrogenated epoxy resins and aliphatic epoxy resins.

The epoxy resin employed in each composition will generally be present in an amount of 25 to 150 parts by weight based on 100 parts by weight of the prepolymeric or monomeric syrup contained in the composition employed to make each respective layer.

The photoinitiator employed to polymerize the prepolymeric or monomeric syrup in each composition may be any conventional free radical photoinitiator activatable by, for example, ultraviolet light. An example of a suitable photoinitiator is 2,2-dimethoxy-1,2-diphenylethane-l-one (Irgacure™ 651 available from Ciba-Geigy Corporation). The photoinitiator will typically be employed in an amount of 0.01 to 5 parts by weight per 100 parts of the prepolymeric or monomeric syrup.

The heat-activatable hardener is added to each composition to effect the curing of the epoxy resin under application of heat. The hardener may be any type, but preferably an amine type hardener that is selected from the group comprising dicyandiamide or polyamine salts. These are available from a variety of sources, e.g., Omicure™ available from Omicrcn Chemical and Ajicure™ available from Ajinomoto Chemical. The heat-activatable hardener will typically be employed in an amount of 0.1 to 20 parts by weight, and preferably 0.5 to 10 parts by weight per 100 parts by weight of the prepolymeric or monomeric syrup. Sufficient hardener should be employed to achieve cure of the epoxy resin.

The epoxy curatives can be varied for each layer to impart different curing temperatures for each layer, and thereby controlling the flow characteristics of each layer. Other types *of* curatives that are useful include acid and anhydride curatives. For example, by using an amine salt as a curative in the expandable layer and an anhydride curative in the upper or weatherable layer, a two layer sealing tape can be made in which the expandable layer flovs and expands and cures at a certain temperature, and while the weatherable layer flows and cures at a higher temperature. Examples of anhydride curatives include phthalic anhydride, hexahydrophthalic anhydride, tetrahydrophthalic anhydride, trimellitic anhydride, pyromellitic dianhydride, maleic anhydride, 1,2-cyclohexane dicarboxylic anhydride, succinic anhydride, dodecenyl succinic anhydride, 3,3',4,4'-benzophenonetetracarboxylic dianhydride, nadic methyl anhydride, methyl hexahydropthalic anhydride, polymeric anhydrides, and glutaric anhydride.

Examples of acid curatives include acrylic acid, methacrylic acid, crotonic acid, itaconic acid, fumaric acid, maleic acid, citraconic acid, adipic acid, suberic acid, azelaic acid, sebacic acid, and dodecanedioic acid.

Since there are many points in, for example, an automotive painting cycle at which the sheet material may be used, the heat to which the sheet material is exposed may be insufficient to fully cure the epoxy resin. In these cases, it may be advantageous to add an accelerator to the prepolymer blend, so the resin may fully cure at a lower temperature, or may fully cure when exposed to heat for shorter periods. The accelerators are typically selected based on the type of epoxy curative used. Imidazoles and urea derivatives are particularly preferred in the practice of the present invention for use as accelerators because of their ability, as shown by the examples with amine curing agents herein, to extend the shelf life of acrylic based materials containing uncured epoxy resin. The most preferred imidazoles for use in the present invention are 2,4-diamino-6-(2'-methyl-imidazoyl)-ethyl-s-triazine isocyanurate, 2-phenyl-4-benzyl-5-hydroxymethylimidazole, 2,4-diamino-6-(2'-methylimidazoyl)-ethyl-s-triazine, hexakis (imidazole) nickel phthalate and toluene bis-dimethylurea. Such an accelerator may be employed typically in an amount of up to 20 parts by weight per 100 parts by weight of the prepolymeric or monomeric syrup.

For acid and anhydride curing agents, typical accelerators include amines, ammonium compounds, phosphonium compounds, dicyandiamide, and sulfonate compounds. Examples of suitable accelerators for acid and anhydride curatives are trimethylamine, triethylamine, imidazole, triisopropylamine, dimethylbenzylamine, tris-(2,4,6-dimethylaminomethyl)-phenol, triethylammonium chloride, triisopropylammonium chloride, dimethylbenzylammonium chloride, triethylamine sulfonate, tetramethyl ammonium chloride, tetraethyl ammonium bromide, tetrabutylammonium iodide, triphenyl phosphonium acetate, ethyltriphenylphosphonium bromide, 2-dimethylaminoethyl triphenyl phosphonium bromide, N,N-Dimethylacrylamide, and N-vinylcaprolactam.

As indicated above, the composition used for preparing the lower layer also includes a blowing or foaming agent or expandable spheres which are activatable by heating to provide the desired expansion of the lower layer. Suitable blowing or foaming agents are well known in the art and include azo-derivatives and inorganic compounds such as carbonates and bicarbonates. Suitable expandable spheres are also well known in the art. A blowing or foaming agent will preferably be employed in an amount of 0.1 to 5 parts by weight per 100 parts by weight of the prepolymeric or monomeric syrup in the composition used for preparing the lower layer.

Nonwoven and loosely woven fabrics or scrims can be used to add strength to the sheet either between the two layers, or laminated to one or both exposed surfaces.

A nonwoven laminated to the bottom surface also provides channels to allow trapped air to escape during the bonding process. When a strip of the sheet material is applied to a substrate, air can be trapped between the sheet and the substrate, particularly when the bottom surface of the sheet material is tacky. As the sheet material is heated, trapped air expands to form an air bubble, which collapses when the sheet material is cooled and a dimple or a defect is formed on the surface of the sheet material. The defect can be avoided by laminating a nonwoven scrim to the bottom surface so that when it melts sufficiently to flow through the nonwoven and bond to the substrate, and entrapped air can escape around the nonwoven fibers.

Useful nonwovens can be formed from natural and synthetic polymeric fibers that adhere to the sheet material such as polyester, nylon, cotton, polypropylene, cellulose acetate, acetate, or blends thereof. It is preferred that the nonwoven materials are relatively thin, e.g., from 0.005 to 0.1 mm thick. The useful thickness of the scrim materials can vary depending upon the thickness of the sheet material, but the scrim is typically less than 20% of the total thickness of the sheet, and preferably, the scrim is less than 10% of the total thickness of the sheet. Suitable nonwoven materials typically have a basis weight range of 5 to 200 grams/square meter, and preferably from 25 to 150 grams/square meter. Suitable nonwovens are commercially available under the tradename CEREX™, from Mitsubishi Petrochemical Co., and under the tradename Syntex™, from the Reemay Co.

Long strands of yarns, fibers, or filaments can also be used to reinforce the sheet material. The strands can be positioned between the layers, embedded within either the upper or lower layer, or adhered to the exposed surface of either layer. Preferred fibers have a diameter greater than 5 microns and less than one-tenth the thickness of the sheet material. The strands can be made from polyester, nylon, acetate, cellulose, and cotton. The number of strands will vary depending upon the size of the yarn, fiber, or filament and the amount of reinforcement needed. The number can vary from 1 to 2000 strands per cm width, and more typically from 1 to 200 strands per cm width.

A thermoplastic film that is dimensionally stable at temperatures of use, i.e., oven paint cycles up to 200°C and cold weather temperatures down to -40°C, can be laminated to the exposed surface of the upper layer of the sheet material before thermosetting to provide a smooth surface for painting after thermosetting. Useful films include polyimide films and biaxially oriented polyester films having thicknesses ranging from 0.025 mm to 0.5 mm, and preferably having thicknesses in the range from 0.05 mm to 0.25 mm. The film can be treated to enhance adhesion to the layers, e.g., primed or corona treated.

Other useful materials which can be blended into the thermosettable, melt-flowable compositions include fillers, pigments, fibers, woven and nonwoven fabrics, antioxidants, stabilizers, fire retardants, and viscosity adjusting agents.

The above composition is coated onto a flexible carrier web, preferably a silicone release liner which is transparent to ultraviolet radiation, and polymerized in an inert, i.e., a substantially oxygen free atmosphere, e.g., a nitrogen atmosphere. A sufficiently inert atmosphere can be achieved by covering a layer of the photoactive coating with a plastic film which is substantially transparent to ultraviolet radiation, and irradiating through that film in air as described in U.S. Pat. No. 4,181,752 (Martens et al.). The liners may then be removed when it is desired to use the resulting sheet material in the method of the invention.

Nonwoven materials or strands of yarn, fibers, or filaments can be incorporated into the sheet material by coating the composition of either the upper layer or the lower layer onto the nonwoven or strands positioned on the transparent film, and polymerizing the composition. Alternatively, the nonwoven or the strands can be laminated between the upper and lower layers, or they can be laminated to the exposed surface of either layer. Preferably, the strands or the nonwovens are laminated to the exposed surface of the lower layer.

Furthermore, a film may be situated between the upper layer and lower layer to improve handleability of the sheet material and to distribute the expansion force as the lower layer expands to improve aesthetics of the cured sheet material. A polymeric film is preferred. The film may also be attached to the exposed surface of the lower layer.

Useful films include those made from polyester, acrylates, polyamides, polyimides, polyesters, and nylons. Metal foils, such as aluminum foil, and nonwovens, such as nonwoven polyester, can also be used for this purpose.

When the surface of the lower layer is not pressure sensitive at the application temperature, e.g., tacky at room temperature, a pressure sensitive adhesive or pressure sensitive adhesive transfer tape may be applied to part of, or the entire surface of, the lower layer. Commercially available pressure sensitive adhesive transfer tapes include 467 and 468 tapes from Minnesota Mining and Manufacturing Company.

The upper layer preferentially encapsulates the lower layer and the substrate after heating, but embodiments in which the lower layer is not encapsulated are also useful. The use of a non-encapsulated lower layer is facilitated by the application of paint to the sheet material. The paint strengthens the sheet material so that these less preferred embodiments of the invention become more durable.

The sheet material may also comprise more than two layers which comprise melt-flowable compositions. Three layer constructions may be envisaged in which the layers are arranged in various orders. For instance, non-expandable layer/expandable layer/non-expandable layer (upper/middle/lower) and non-expandable layer/non-expandable layer/expandable layer constructions, among others, work as well as two layer constructions.

The sheet materials of the present invention have a number of applications in industry. One utility is in the automotive industry where they can be utilized in a process to seal metal joints in automobiles. By this process, one first prepares a sheet material such as by the below-described processes. Subsequently, the sheet material would be applied over the joint to be sealed. In a preferred embodiment, complete sealing and bonding would be obtained because the lower layer of the sheet material flows and expands and the upper layer flows to encapsulate the lower layer prior to hardening. As a result of this expansion and flow, an aesthetic surface appearance is achieved. The exposed surface of the hardened sheet material can then be painted or otherwise decorated to match the automobile body.

In some cases it is desirable for the upper layer to have a higher initiation temperature than the lower layer. The initiation temperature is defined as the temperature at which the epoxy starts to cure, and is determined using a differential scanning calorimeter (Perkin-Elmer DSC-2C) using a ramp speed of 10°C per minute. When the lower layer cures first, the upper layer remains sufficiently fluid to flow over and cover the lower layer.

The invention is further illustrated by the following examples in which all parts are expressed as parts by weight unless otherwise indicated.

### TESTS

### PAINTABILITY

A piece of tape measuring 2.5 cm by 2.5 cm is adhered to a 5.0 cm by 10.2 cm ED-11 panel (electrodeposition primed steel panel available from Advanced Coating Technologies, Inc.). The panel is cured at 177°C for 12 minutes. The tape and panel are coated with a base coat (HWB90394 Bright White from PPG Ind., Inc.) and dried at room temperature for about one hour. A clear coat (NCT II from PPG Ind., Inc.) is then coated over the base coat and the panel is placed in a 121°C oven for 30 minutes. The painted tape is checked for wrinkling of the paint surface and recorded as OK (no wrinkling) or FAIL (wrinkling).

### WEATHERING TEST

This test measures the change in paint color due to exposure or "weathering" in a particular environment. Two panels are prepared for each example according to the procedure described for PAINTABILITY (painted white). One sample is then aged in a weathering chamber ("QUV" from Q-Panel Co.) for 250 hours according to ASTM G-53 with repeating cycles of 4 hours of W light at 60°C followed by 4 hours condensing humidity at 50°C. The other similarly prepared panel is kept at room temperature in the dark. After 250 hours the exposed and unexposed panels are measured for color values using an ACS Spectro-Sensor II spectrophotometer and associated computer (from Applied Color Systems, Inc.). The total color difference is calculated on the computer and is recorded as Delta E under weathering (WTH). Low values of Delta E are desired since they indicate less color change.

### MELT FLOW

This test measures the amount of flow that the tape exhibits as it cures. A 2.5 cm by 2.5 cm square piece of tape is placed at the top edge of a 5.0 cm by 10.2 cm anodized aluminum panel. A 2.5 cm by 5.0 cm strip of anodized aluminum is weighed (Wt) and then pressed lightly onto the tape. The panel is hung vertically in a 177°C panel for 12 minutes. The panel is removed from the oven and the amount of flow is measured by the distance that the strip has moved down from the top of the panel. The distance is recorded in centimeters (cm). A distance of 11+ indicates that the strip moved completely off of the panel.

### OVERLAP SHEAR

A 1.25 cm by 2.5 cm strip of the tape is adhered between the overlapping ends of two ED-11 panels measuring 2.5 cm by 5 cm such that the free ends of the panels extend in opposing directions and the length of the tape is placed across the lengths of the panels. The sample is rolled down with two passes of a 6.8 kg roller.

For initial results (INIT), the sample is conditioned at room temperature for 20 minutes, then the opposing ends of the panels are clamped into the opposing jaws of an Instron Tensile Tester, and pulled at a rate of 5 cm/min. The force at adhesive failure is recorded in Newtons/square centimeter (N/cm²) or MegaPascals (MPa).

For shear strength after curing (CURED), the sample is heated to 177°C for 12 minutes, held at room temperature for 5 minutes, heated to 121°C for 30 minutes, and cooled to room temperature before testing as described above.

### 90° PEEL ADHESION

A 1.25 cm by 15.2 cm strip of tape was laminated to a 0.13 mm thick strip of anodized aluminum. The strip is then laminated to an ED-11 panel described above and rolled down with 2 passes of a 2 kg roller. The panel is then attached to a fixture on an Instron so that the aluminum foil is pulled off at a 90° angle. The aluminum foil is pulled off at a speed of 30.48 cm per minute. The peel adhesion is recorded in Newtons per decimeter (N/dm).

### TENSILE STRENGTH AND ELONGATION

The tape is cured at 120°C for 30 minutes and cooled to room temperature. A dumbbell shaped sample (prepared according to ASTM D-412) is clamped into the jaws of an Instron Tensile Tester. The jaws are separated at a speed of 50.8 cm per minute. The tensile force (TENS) at break in Newtons/square centimeter (N/cm²) and elongation (ELON) in % at break are recorded.

For TESTS C, D, E, and F in Tables 5 and 6, the sheet was cured for 20 minutes at 177°c. The tensile strength and elongation are determined according to ASTM D412-87 on an Instron™Tensile Tester, using the described sample length of 33.27 mm., and a jaw separation speed of 50.8 centimeters per minute. The samples are conditioned at least 24 hours after curing before testing. Tensile results are reported in megaPascals (MPa) and elongation is reported in percent of the original length (%).

### EXPANSION

The thickness of the tape is measured before heat curing and after heat curing and expansion. The difference in thickness in millimeters (mm) is recorded.

### STORAGE MODULUS

This test measures the modulus of a tape. The test is performed on a sample that is 25 mm in diameter and 1.5 to 2.0 mm thick. The test is conducted on a Rheometrics Dynamic Analyzer II available from Rheometrics, Inc., using a parallel plate geometry at 25°C, and a frequency of 10 radians per second. The storage modulus (G') is recorded in Pa (dynes/cm²).

Paint Adhesion : A sample measuring 2.54 cm by 7.5 cm is applied to a PPG ED-11 electro-coated steel panel and heated at 177°C for 12 minutes. The panel is then coated with a base coat HWB90394 (white from PPG Industries, Inc.) and baked in an oven at 121°C for 30 minutes. A 2-part clear coat (Part A is CNCT2AH, Part B is CNCT2BE, from PPG Industries, Inc.) is mixed by hand according to the manufacturer's instructions and spray painted onto the base coat and cured at 177°C for 12 minutes. The painted panel is then cooled to room temperature and conditioned for at least 16 hours. The paint is then tested for Paint adhesion by cross hatching the cured paint surface and testing for adhesion of the paint to the sheet. The test is conducted according to ASTM D-3359-90. The test results are reported as a percentage of the paint surface that is left intact on the sheet.

Cured Hardness: The hardness of a sample cured for 20 minutes at 177°C is determined using a Shore A hardness tester and the test results are reported in Shore A hardness.

### GLOSSARY

- BA -: butyl acrylate
- B60 -: Butyl methacrylate/methyl methacrylate copolymer with T_{g}=75°C (Acryloid™B-60 available from Rohm and Haas Co.)
- B66 -: n-butyl methacrylate/methyl methacrylate copolymer with T_{g}=50°C (Acryloid™B-66 available from Rohm and Haas Co.)
- B67 -: isobutyl methacrylate polymer with T_{g}=50°C (Acryloid™B-67 available from Rohm and Haas Co.)
- B72 -: ethyl methacrylate copolymer with T_{g}=40°C (Acryloid™B-72 available from Rohm and Haas Co.)
- B82 -: methyl methacrylate copolymer with T_{g}=35°C (Acryloid™B-82 available from Rohm and Haas Co.)
- CDDGE -: 1,4-Cyclohexane dimethanol diglycidyl ether (Heloxy™107 from Rhone-Poulenc)
- DGEBA -: diglycidyl ether of bisphenol-A (Epon™828 from Shell Chemical Co.)
- DGEOBA -: diglycidyl ether oligomer of bisphenol A (EPON™1001F from Shell Chemical Co.)
- DICY -: micronized dicyandiamide (DYHARD™ 100 available from SKW Chemical)
- HDGEBA -: hydrogenated diglycidyl ether of bisphenol A (Eponex™1510 from Shell Chemical Co.)
- HINP -: hexakis imidazole nickel phthalate
- IRGACURE™651 -: 2,2-dimethoxy-2-phenyl acetophenone photoinitiator (available from Ciba Geigy)
- KB-1 -: benzil dimethyl ketal photoinitiator (Escacure™KB-1 from Sartomer)
- NVC -: N-vinyl caprolactam
- TDI -: 1,1'-(4-methyl-m-phenylene)-bis(3,3'-dimethylurea (Omicure™24 from Omicron Chemicals)
- NNDMA -: N,N-Dimethylacrylamide (Jarchem)
- Tone™0240 -: Polycaprolactone diol (Union Carbide; M.W. = 2000)
- Tone™P767E -: Polycaprolactone polymer (Union Carbide)
- Dynapol™51402 -: Polyester copolymer (Hüls, America)
- Irg 1010 -: Irganox™1010 Antioxidant (Ciba-Geigy)
- 2MZ Azine -: Curezol™2MZ Azine - 2,4-Diamino-6 [2'-methylimidazolyl-(1')]] ethyl-s-triazine (Air Products)
- C15-250 -: glass microspheres (Minnesota Mining & Manufacturing Co.)
- CBr₄ -: carbon tetrabromide
- HDDA -: Hexane dioldiacrylate
- DICY -: Amicure™CG-1200 micronized dicyandiamide (Air Products)
- VAZO™88 -: 1,1'-Azobis(cyclohexanecarbonitrile (DuPont)
- PMMA -: Poly(methyl methacrylate) macromer (ICI)

### Examples 1-14

Tapes were prepared as described below using the specific amounts of the materials in each of the formulations as shown in Table 1. A 50/50 mixture of BA and NVC was heated to 50°C to form a solution. More BA was added so that the total amount of BA was equal to the amount shown in the table. The solution was placed in a jar with HDGEBA and B60. The jar was placed on a roller mill overnight to dissolve the B60. After the B60 was dissolved, the following materials were added: photoinitiator - 0.14 phr (parts per hundred parts BA and NVC combined) Irgacure™651; epoxy curing agents - 7.5 phr (parts per hundred parts of epoxy resin) DICY, and 6.2 phr TDI; and 4 parts of hydrophilic fumed silica (Aerosil 200 available from DeGussa). The composition was mixed with a high shear mixer for 15 minutes, degassed, and knife coated to a thickness of 1.1 mm onto a 0.05 mm thick silicone coated polyester liner and covered with a similar liner. The coated composition was photopolymerized to form a sheet using ultraviolet light sources having 90% of the emissions between 300 to 400 nm with a maximum at 351. The light intensity was 1.54 mW/cm² above the web and 1.54 mW/cm² below the web as measured with a UVIRAD radiometer (Model No. VR365CH3) from E.I.T. (Electronic Instrumentation & Technology, Inc.). The total energy was 397 mJ/cm² above the web and 386 mJ/cm² below the web. The sheet was then cut into tapes and tested for peel adhesion, tensile strength and elongation, overlap shear strength, weathering, and melt flow according to the above test procedures. Test results are shown in TABLE 1. All of the samples were OK for paintability.

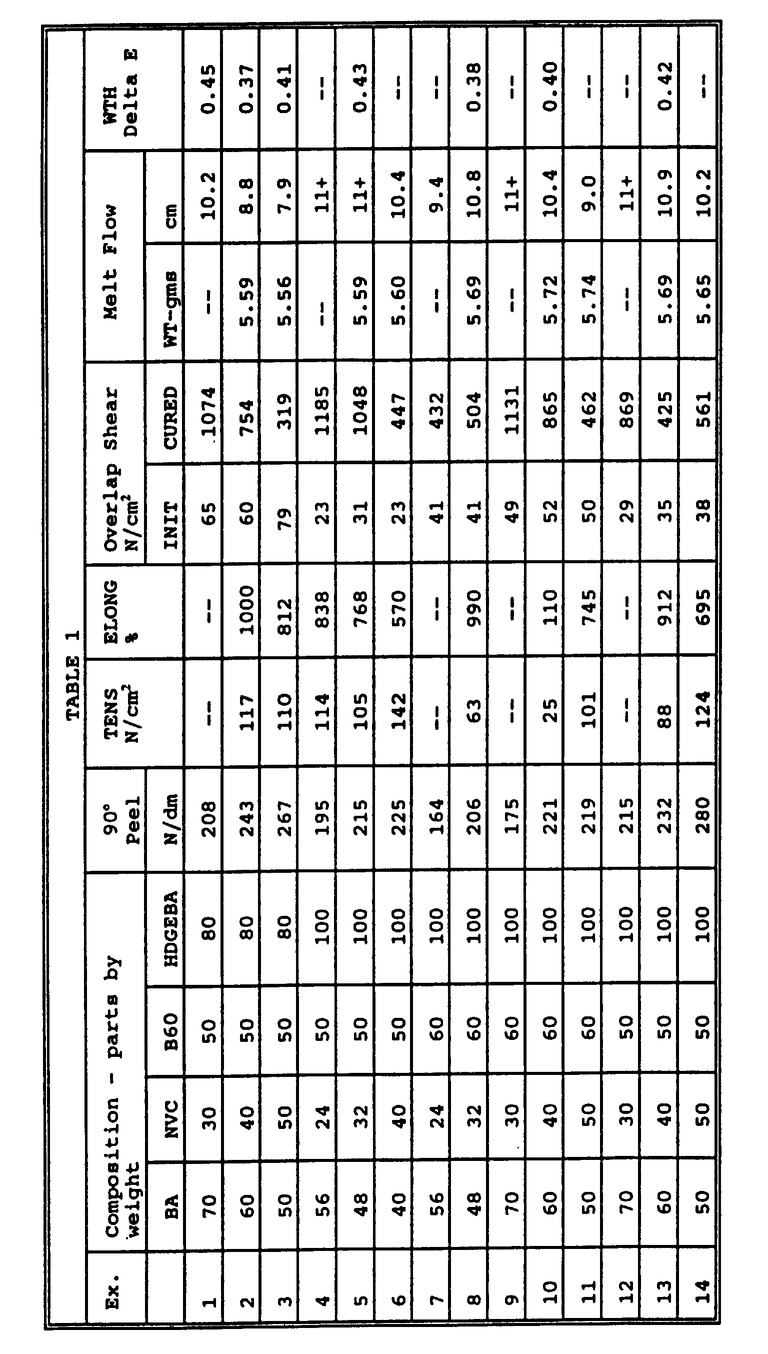

The data in Table 1 show that these tapes have adequate tensile strength, good overlap shear properties, and good melt flow before curing to a thermoset state.

### Examples 15-23

Tapes were made as described for Example 1 with the compositions shown in Table 2 except as follows: 0.14 phr of KB-1 was used as the photoinitiator; the epoxy curing agents were 4.5 phr DICY and 1.0 phr HINP; and instead of Aerosil™200, 5.0 parts of Cab-O-Sil M5 silica from Cabot Corp. was used. Example 19 was prepared with a different epoxy - CDDGE. In Examples 20-23 different copolymers were used as follows: Example 20 - B67; Example 21 - B72; Example 22 - B82, Example 23 - B66. Test results are shown in TABLE 2. The tapes were OK for paintability.

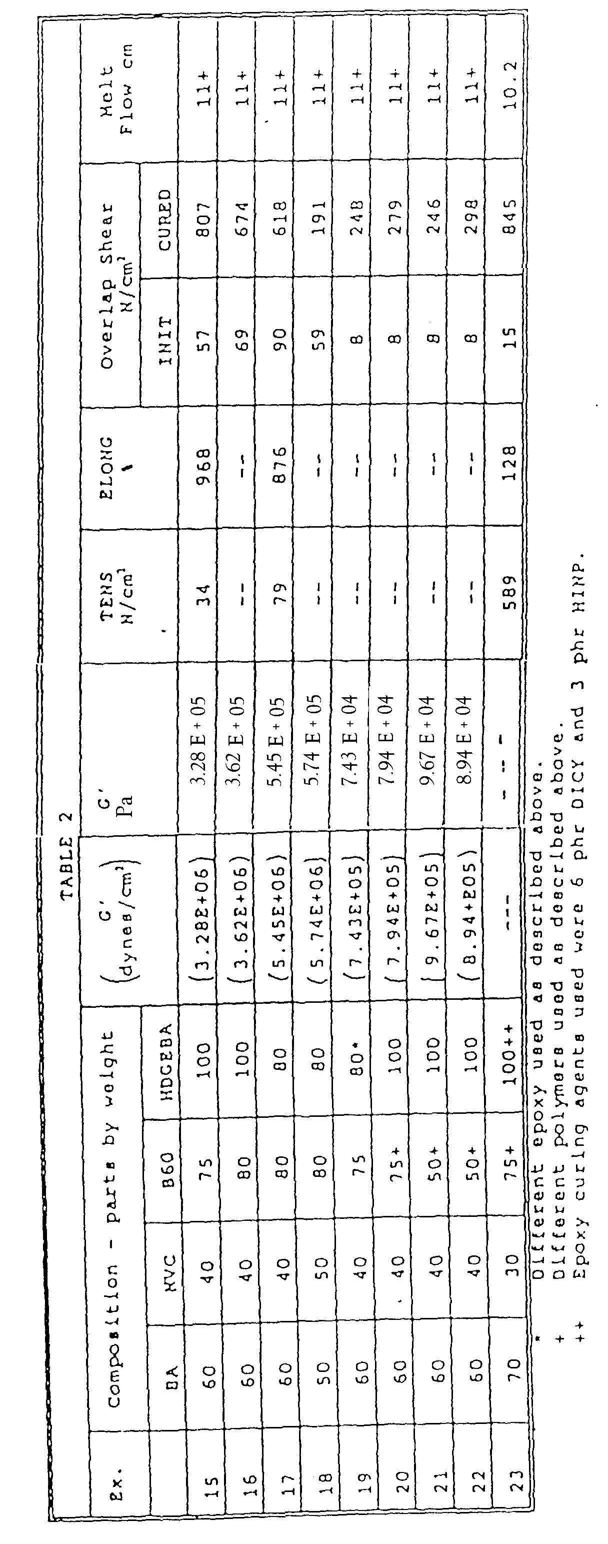

The data in TABLE 2 show that the tape flows at 177°C and cures to provide adequate overlap shear properties.

### Example 24

A three-layer tape was constructed having an expandable layer, a flowable layer that is also weatherable, and a film between the expandable and flowable layers. The flowable layer was prepared by mixing 40 parts BA and 40 parts NVC and heating to 50°C to form a solution. The solution was placed in a jar and 20 parts BA, 80 parts B60, and 80 parts HDGEBA were added to form a mixture. The jar was then capped and placed on a roller mill overnight to dissolve the B60. To the mixture were added 0.14 parts KB-1 photoinitiator, 0.10 parts of an antioxidant (Irganox™1010 from Ciba Geigy ), 4.5 parts DICY, 1.0 part HINP, and 5 parts Cab-O-Sil M5. After mixing with a high speed mixer for 15 minutes, the mixture was degassed and coated to a thickness of 1.5 mm onto a 0.05 mm thick silicone coated polyester release liner. A 0.025 mm thick polyester film that was primed on both sides was placed on top of the coated mixture. The primer was an aqueous dispersion of colloidal silica having 25% Nalco 2326 (from Nalco Chemical Co.), 0.3% 3-aminopropyltriethoxysilane, and 0.03% Triton X-100 (from Rohm & Haas) in deionized water. The coated mixture was photopolymerized to form a sheet using ultraviolet light sources having 90% of the emissions between 300 to 400 nm with a maximum at 351. The light intensity was 2.40 mW/cm² above the web and 1.50 mW/cm² below the web as measured with a WIRAD radiometer (Model No. VR365CH3) from E.I.T. (Electronic Instrumentation & Technology, Inc.). The total energy was 401 mJ/cm² above the web and 251 mJ/cm² below the web. The tested tape had a tensile strength (INIT) of 89 N/cm² and elongation of 840% at room temperature and tensile strength (CURED) of 574 N/cm² and elongation of 50% after heating as described in the above test.

The expandable layer was prepared by mixing 20 parts BA with 20 parts NVC and heating to 50°C to form a solution. The solution was placed in a jar with 60 parts BA, 80 parts DGEOBA, and 20 parts DGEBA. The jar was capped and left on a roller mill overnight. To the mixture was then added 0.1 part KB-1, 0.8 part carbon tetrabromide, 4.5 parts DICY, 1.0 part HINP, 0.60 part 2,2'-Azobis-2-methylbutyronitrile (Vazo 67 from DuPont Company), 0.15 part glycidoxypropyltrimethoxysilane (G6720 from Hüls America, Inc.), 8 parts Aerosil R-972, 2.5 parts Cab-O-Sil M5, and 4 parts glass bubbles (C15-250 glass bubbles available from Minnesota Mining and Manufacturing Co.). The mixture was mixed vigorously, then degassed, and knife coated to a thickness of 0.5 mm onto a 0.05 mm thick silicone coated polyester release liner. A 0.05 mm thick silicone coated polyester release liner was placed over the coated mixture and the mixture was cured as described above for the flowable layer. The light intensity was 2.38 mW/cm² above the web and 1.49 mW/cm² below the web. The total energy was 281 mJ/cm² above the web and 176 mJ/cm² below the web.

A 2.02 mm thick three-layer composite was made by removing one of the release liners from the expandable layer and laminating the expandable layer to the other primed surface of the polyester film that was adhered to the flowable layer.

A 1.9 cm by 7.6 cm tape was cut from the composite for testing. The expandable layer side of the tape was applied to an ED-11 panel and the other release liner on the flowable side was removed. The panel with the tape was heated at 177°C for 12 minutes. After cooling and cutting apart the tape, it was found that the top layer had flowed to cover the exposed surfaces of both the polyester film and the bottom expandable layer so that all of the exposed surfaces of the tape were weatherable. The thickness of the tape increased from 2.02 to 2.5 mm.

### Examples 25-30

A melt sealing composition for a top layer was prepared, according to the procedure of Example 24, having a composition of 60 parts BA, 40 parts NVC, 80 parts HDGEBA, 80 parts B60, 0.16 part KB-1, 6 parts DICY, 3 parts 2MZ Azine (from Air Products), and 4.5 parts Cab-O-Sil M5. The composition was coated between two release treated polyester liners and cured as in Example 24. An expandable composition for a lower layer was prepared, according to the procedure of Example 24, having a composition of 80 parts BA, 20 parts N,N-dimethylacrylamide, 20 parts DGEBA, 80 parts DGEOBA, 20 parts B60, 0.1 part KB-1, 0.4 parts carbon tetrabromide, 0.6 part 1.1-azobis(cyclohexane carbonitrile), (Vazo 88) 0.15 part glycidoxypropyltrimethoxysilane, 4.5 parts DICY, 1.0 part HINP, 2 parts Cab-O-Sil M5, and 4 parts Aerosil R972 (available from DeGussa). The composition was coated to a thickness of 0.51 mm and cured as described above for the upper layer.

Reinforcing layers, shown in TABLE 3, were laminated at room temperature between the two layers for examples 26-30. Example 25 did not have a reinforcing film.

The reinforcing film of Example 30 was prepared by mixing 80 parts isooctyl acrylate, 20 parts acrylic acid, and 0.04 part Irgacure™651, and polymerizing to a coatable viscosity of 3 Pa.s (3000 cps) using ultraviolet black lights. The partially polymerized mixture was then coated to a thickness of 0.13 mm between release treated polyester films, and cured as described above for the top and lower layers. Samples measuring 2.5 cm by 7.5 cm were cut from each of the sheets and placed on 5 cm by 10 cm steel panels that had been electro-coated with PPG-ED-11 (from Advanced Coatings Technology, Inc.). The sheets were thermoset at 177°c for 20 minutes. After cooling, the samples were examined for sealing and appearance. All of the samples exhibited complete encapsulation and sealing of the lower layer by the upper layer. Examples 26-30 had a smooth surface after thermosetting, while Example 25 had a rough surface.

**TABLE 3**

| | |
|---|---|
| Ex | Reinforcing Film |
| 25 | None |
| 26 | Polyester Film from Example 23 |
| 27 | Reemay T706 Nonwoven from Reemay Co. |
| 28 | 0.13 mm thick aluminum foil from All Foils, Inc. |
| 29 | 0.51 mm thick polyimide film (Apical 200 AV from Allied Signal) |
| 30 | Acrylate film |

### Example 31

A composition for a 1 mm thick expandable layer was prepared by mixing 15 parts butyl acrylate, 85 parts N-vinyl pyrrolidone, and 0.04 parts of Irgacure™651 in a jar, purging with nitrogen, and partially polymerizing with an ultraviolet black light to a viscosity of 3 Pa.s (3000 cps). The following were added with continuous mixing: 0.1 parts Irgacure™ 651, 85 parts DGEOBA with an epoxy equivalent weight of 500, 15 parts DGEBA, 7 parts dicyandiamide (CG1200 from Omicron Chemical Co.), 2.5 parts 2,4-diamino-6-(2'-methyl-imidazoyl)-ethyl-S-triazine isocyanurate (2MA-OK from Shikoku Chemical Co. Ltd.), 7 parts silica (Aerosil™R-972 from DeGussa), 5.5 parts glass bubbles (C15/250 Glass bubbles from Minnesota Mining and Manufacturing Co.), 0.4 part polydimethylsiloxane (TSF-451-1000 from Toshiba Silicone Co. Ltd.), 4 parts foaming agent (Microcapsule F-50 from Matsumoto), and 0.05 part mercaptoproionic acid. After mixing, the composition was degassed, coated to a thickness of 1 mm, and cured as described in Example 1 using a light intensity of 1.76 mW/cm² on the top and bottom and 975 mJ/cm² total energy, to form an expandable layer. The expandable layer had an initiation temperature of 145°C (determined by DSC as described above).

A 1 mm thick melt flowable layer was prepared as described above for the expandable layer except that DICY, 2MA-OK, and the foaming agent were not used, and 15 parts of adipic acid dihydrazide were added to the composition as the epoxy curative. The melt flowable layer had an initiation temperature of 175°C.

A sheet material was prepared by laminating the melt flowable layer to the expandable layer with a hand held roller to form a 2 mm thick sheet. A sample was placed on an ED-coated panel with the expandable layer against the panel, and cured at 150°C for 20 minutes. The surface of the cured sheet was smooth and free of wrinkles.

### Examples 32-35

A composition for a melt flowable layer (A) was prepared by mixing 72 parts BA, 28 parts N,N-dimethylacrylamide (NNDMA), and 0.04 parts Irgacure™651. The mixture was partially polymerized as described in Example 30. The following were added to the mixture: 0.1 part Irgacure™651, 2.0 parts glycidyl methacrylate, 60 parts Epon™1001 (from Shell Chemical Co.), 20 parts DGEBA, 6 parts CG1200, 2 parts 2MA-OK, 4 parts Aerosil R972, 4 parts C15/250 glass bubbles, and 0.2 parts 3-mercaptopropionic acid. The composition was mixed, degassed, coated to a thickness of 1 mm, and cured as in Example 31.

Layer B was prepared as for Layer A with the following changes in the composition: 80 parts BA, 20 parts NNDMA, 3 parts glycidyl methacrylate, 85 parts Epon™1001, 15 parts DGEBA, 7 parts CG1200, 2.5 parts 2MA-OK, and 1.2 parts of a blowing agent (AZ-M3 from Ohtsuka Chemical).

Layer C was prepared as for Layer B with the following changes in the composition: 2.0 parts 2MA-OK were used and the blowing agent was omitted.

The sheet materials were prepared by laminating the layers as shown in Table 4 with a hand roller. Samples were laminated to ED-11 coated steel panels and cured at 140°C for 20 minutes. Samples were cooled to room temperature before testing shown in Table 4.

**Table 4**

| | Ex 32 | Ex 33 | Ex 34 | Ex 35 |
|---|---|---|---|---|
| Top Layer | A | C | A | B |
| Middle Layer | None | None | B | None |
| Bottom Layer | B | B | C | A |
| Hardness* | 96 | 89 | 96 | 86 |
| Appearance** | Smooth | Smooth | Smooth | Textured |
| Gap*** | None | None | None | None |

| | | | | |
|---|---|---|---|---|
| *Hardness determined by JIS-A Type Hardness Tester | | | | |
| **Appearance judged visually as smooth or textured | | | | |
| ***None indicates that the sheet material flowed during thermal curing in a U-shaped roof channel to seal the channel and provide an aesthetic surface | | | | |

### Example 36

An expandable layer was prepared by mixing 80 parts BA, 20 parts NNDMA, 80 parts DGEOBA, 20 parts DGEBA, 5.0 parts polycaprolactone (Tone™767E available from Union Carbide), 2.8 parts DICY, 1.2 parts HINP, 0.16 part KB-1, 0.1 part Irganox"1010, 0.4 part CBr₄, 0.05 part hexanedioldiacrylate, 1.0 part 1,1-azobis(cyclohexanecarbonitrile) (Vazo 88 from DuPont), 0.15 part glycidoxypropyltrimethoxysilane, 4.0 parts C15/250 glass bubbles, and 4.0 parts Cab-O-Sil M5. The mixture was then degassed, and knife coated to a thickness of 1 mm between 0.05 mm thick silicone coated polyester films, and cured as described in Example 1. The light intensity was 2.25 mW/cm² above the web and 1.77 mW/cm² below the web. The total energy above the web was 225 mJ/cm² and 177 mJ/cm² below the web.

A melt flowable layer was prepared according to the procedure of Example 1 with the following composition: 60 parts BA, 40 parts NVC, 80 parts B60, 80 parts HDGEBA, 0.14 part KB-1, 0.10 part Irganox™1010, 6 parts DICY, 3 parts 2MZ Azine, and 4.5 parts Cab-O-Sil M5. After the mixed composition was degassed, the top film was removed from the expandable layer and the composition for the melt flowable layer was knife coated to a thickness of 1.25 mm on top of the expandable layer, and covered with a 0.05 mm thick silicone coated film. The coated sheet was cured with lamps described in Example 1 with light intensity of 2.3 mW/cm² above the web and 2.1 mW/cm² below the web. The total energy was 550 mJ/cm² above the web and 503 mJ/cm² below the web.

The film was removed from the expandable layer side of a sample measuring 1.9 cm by 7.6 cm, and the expandable layer was laminated to a steel panel that had been electro-coated with PPG-ED-5100 (from Advanced Coatings Technology, Inc.). The film from the melt flowable side was then removed and the sample was heated at 177°C for 12 minutes. After cooling, the sample was examined for sealing and appearance. The lower layer of the sample was completely encapsulated and sealed by the upper layer to produce a smooth, paintable, and weatherable surface after thermosetting.

### Examples 37-44

The layers for these examples can be used as either an upper layer or a lower layer in a sheet construction. For each example, a composition was formed by mixing 80 parts BA, 20 parts NNDMA, and 80 parts Epon™1001. Various polycaprolactone diols were added in the parts by weight shown in Table 5. The polycaprolactone polyols were heated to 70°C before adding to the epoxy/acrylate mixture. The melt flowable side was then removed and the sample was heated at 177°C for 12 minutes. After cooling, the sample was examined for sealing and appearance. The lower layer of the sample was completely encapsulated and sealed by the upper layer to produce a smooth, paintable, and weatherable surface after thermosetting.

### Examples 37-44

The layers for these examples can be used as either an upper layer or a lower layer in a sheet construction. For each example, a composition was formed by mixing 80 parts BA, 20 parts NNDMA, and 80 parts Epon™1001. Various polycaprolactone diols were added in the parts by weight shown in Table 5. The polycaprolactone polyols were heated to 70°C before adding to the epoxy/acrylate mixture. The remaining ingredients were added using a high shear mixer: 0.16 part KB-1, 0.1 part Irganox™1010, 2.8 parts DICY, 1.2 parts HINP, 4 parts C15/250 glass bubbles, and 4 parts Cab-O-Sil M5 silica.

After degassing under vacuum the mixtures were knife-coated to a thickness of 2 mm between two 0.05 mm silicone coated polyester release liners. The coated mixtures were cured with ultraviolet lights as described in Example 1 with a total energy of 341 mJ/cm² above the web and 310 mJ/cm² below the sheet. The intensity was 1.87 mW/cm² above the sheet and 1.66 mW/cm² below the sheet.

The layers were tested for tensile strength, elongation, and vertical flow and results in Table 5 show how polycaprolactone polyols can be used to modify the flow properties as well as the physical properties of the sheet.

**Table 5**

| Example | 37 | 38 | 39 | 40 | 41 | 42 | 43 | 44 |
|---|---|---|---|---|---|---|---|---|
| TONE™0200 | - | 10 | - | - | - | - | - | - |
| TONE™0240 | - | - | 10 | 20 | - | - | - | - |
| TONE™0230 | - | - | - | - | 10 | - | - | - |
| TONE™0240 | - | - | - | - | - | 10 | 20 | - |
| TONE™0260 | - | - | - | - | - | - | - | 10 |
| TEST A | 55.7 | 315 | 175 | 371 | 140 | 109 | 193 | 91 |
| TEST B | 3.5 | 4.4 | 3.5 | 4.3 | 3.8 | 2.1 | 5.1 | 4.9 |
| TEST C | .1* | .2* | .3* | .2* | .4* | .5* | .4* | .7* |
| TEST D | 792 | 134 | 644 | 64 | 1009 | 954 | 65 | 797 |
| TEST E | 2.7 | 3.2 | 2.9 | 3.9 | 3.8 | 4.1 | 6.3 | 5.4 |
| TEST F | 84 | 30 | 22 | 10 | 35 | 18 | 5 | 9 |
| TEST G | 70 | 85 | 88 | 87 | 85 | 87 | 86 | 92 |
| TEST H | 10 | 22 | 18 | 24 | 15 | 7 | 9 | 4 |
| TEST I | 100 | 100 | 100 | 100 | 100 | 100 | 100 | 100 |

| | | | | | | | | |
|---|---|---|---|---|---|---|---|---|
| * Sample did not break; peak elongation reported TEST A - 90° Peel - N/dm TEST B - Cured Overlap Shear Strength - MPA TEST C - Initial Tensile Strength - MPa TEST D - Initial Elongation - % TEST E - Cured Tensile Strength - MPa TEST F - Cured Elongation - % TEST G - Cured Hardness - Shore A hardness tester) TEST H - Vertical Flow - mm TEST I - Paint Adhesion | | | | | | | | |

### Examples 45 - 50

Single layers were prepared using a polyester polymer (Dynapol™S1402) and polycaprolactone polymers (TONE™300 and TONE™P767E) to alter the properties of the sheet materials in these examples. The layers can be used as either the upper layer or the bottom layer. The basic formulations were the same for all of the examples but different amounts and types of polymers were added as shown in Table 6. Materials used in the basic formulation were: BA - 80; NNDMA - 20; EPON™1001 - 80; KB-1 - 0.16; DICY - 2.8; HINP - 1.2; C15-250 - 4; Cab-O-Sil 5 - 4. The polymers were mixed with the BA, NNDMA, and epoxy and heated, with occasional agitation, to 70°C to melt the polymers and form molten solutions. The remaining components (catalyst, accelerator, photoinitiator, and fillers) were added to the solutions (which had been cooled to room temperature) with a high shear mixer and degassed. Sheets (2.0 mm thick) were prepared as described in Example 36. Examples 45-48 were cured with a total cure energy of 341 mJ/cm² above the web and 310 mJ/cm² below the web, and an intensity of 1.87 mW/cm² above the web and 1.66 mW/cm² below the web. Total energy for Examples 49-50 was 343 mJ/cm² above the web and 304 mJ/cm² below the web and the intensity was 2.07 mW/cm² above the web and 1.83 mW/cm² below the web.

**Table 6**

| Example | 45 | 46 | 47 | 48 | 49 | 50 |
|---|---|---|---|---|---|---|
| TONE™300 | - | 10 | 20 | - | - | - |
| TONE™P767E | - | - | - | 5 | - | - |
| DYNAPOL™S1402 | - | - | - | - | 5 | 10 |
| TEST A | 56 | 59.5 | 35 | 63 | 59.5 | 23.4 |
| TEST B | 3.5 | 2.6 | 0.7 | 2.2 | 2.6 | 3.4 |
| TEST C | 0.1 | 1.0 | 1.1 | 1.5 | 1.0 | 1.2 |
| TEST D | 792 | 833 | 630 | 943 | 833 | 832 |
| TEST E | 2.7 | 2.9 | 2.0 | 1.6 | 2.9 | 1.4 |
| TEST F | 84 | 115 | 340 | 212 | 115 | 150 |
| TEST G | 70 | 82 | 80 | 86 | 82 | 83 |
| TEST H | 10 | 4 | 18 | 5 | 4 | 3 |
| TEST I | 100 | 100 | 100 | 100 | 100 | 100 |
| NOTE: Tests are indicated under Table 5. | | | | | | |

### Example 51 - 53

An adduct of a diglycidyl ether of bisphenol A (DGEBA) and 2-isocyanatoethylmethacrylate (IEM) was prepared by charging the following materials, under a dry air atmosphere, to a 500-ml three-neck, round bottom flask equipped with a mechanical stirrer, reflux condenser, and a thermometer: 200 grams of Epon™828, 10.06 grams IEM (from Dow Chemical Co.), and 6 drops of dibutyl(tin)dilaurate. The flask was immersed in an oil bath and heated to 65°C for 5 hours until no residual isocyanate could be detected by infrared. The reaction product (DGEBA/IEM adduct) was allowed to cool to room temperature and placed in an amber bottle. A 50/50 mixture of BA and NVC was heated to 50°C to form a solution. A mixture (MIX) was prepared by mixing 400 parts of the BA/NVC solution, 600 parts BA, and 1000 parts Epon™1001. The mixture was further compounded with fillers and catalysts as shown in Table 11 and 2.0 mm thick sheets were prepared as described in Example 19. The sheet was substantially tack free. The test data in Table 11 indicate that the stiffness of the sheet material was significantly increased without affecting the melt flow properties.

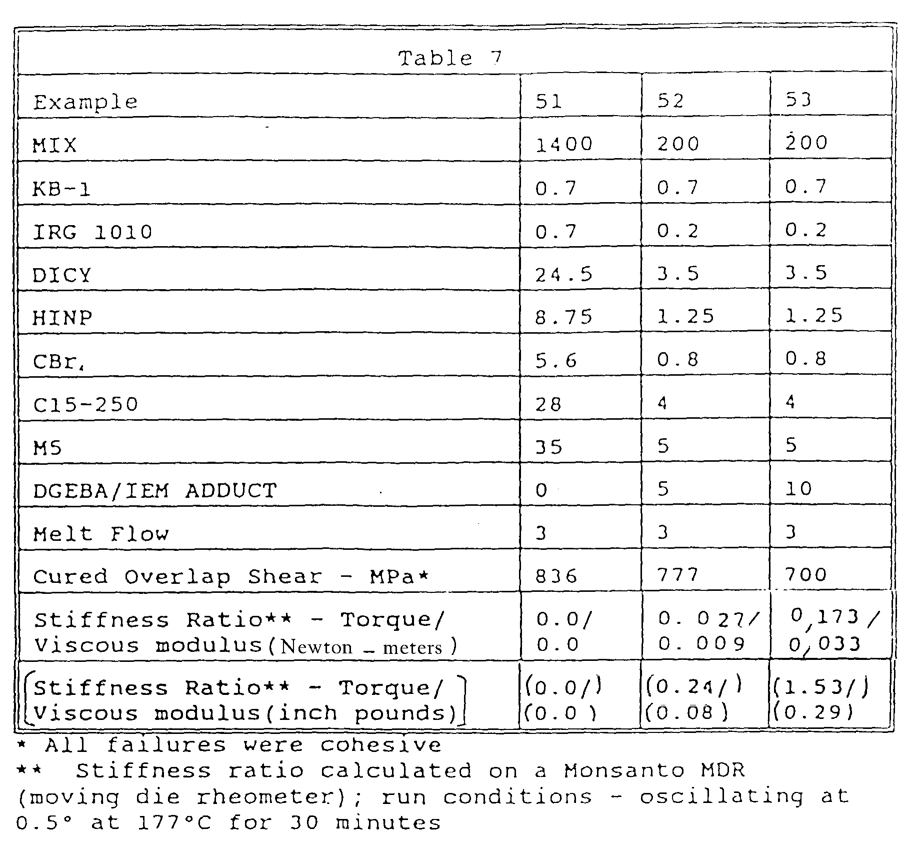

### Example 54

A three layer sheet material was made according to the procedure described in Example 36. The melt flowable layer had the same composition as the melt flowable layer of Example 36 and was coated to a thickness of 1.5 mm. The light intensity was 2.46 mW/cm² above the web and 2.03 mW/cm² below the web. The total energy was 354 above the web and 292 mW/cm² below the web.

A pressure sensitive expandable layer had the same composition as the expandable layer of Example 36 except that it was knife coated to a thickness of 0.12 mm and cured with a light intensity of 2.21 mW/cm² above the web and 1.76 mW/cm² below the web. The total energy was 168 above the web and 134 mW/cm² below the web.

An expandable layer with the same composition as the expandable layer of Example 36 except that 1 part hexanediol diacrylate was used, and the composition was coated to a thickness of 0.75 mm. The composition was cured with a light intensity of 2.20 mW/cm² above the web and 1.75 mW/cm² below the web. The total energy was 251 mW/cm² above the web and 200 mW/cm² below the web.

The sheet material was prepared by laminating the pressure sensitive expandable layer to the expandable layer, and then laminating the melt flowable layer to the exposed surface of the expandable layer. The sheet material was thermoset as described in Example 36. After cooling, the sample exhibited good bond to the pane, and complete encapsulation and sealing of the expandable and pressure sensitive layers by the melt flowable layer to produce a smooth, paintable, and weatherable surface.

### Examples 55 - 60

A premix composition was prepared as described in Example 1 having a composition of 80 parts butyl acrylate, 20 parts N-vinylcaprolactam, and 30 parts poly(vinylbutyral) (Butvar™B79 available from Monsanto Co.). The following were added in the amounts shown in Table 8 and mixed with a high shear mixer for about 20 minutes: DGEBA, KB-1, Irg 1010, HDDA, DICY, 2MZ Azine, PMMA, and VAZO™88. The resulting mixtures were then transferred to glass jars, sealed, and tumbled gently on a mechanical roller.

The mixtures were then knife coated to a thickness of 1.25 mm between two silicone coated polyester release liners. The coated compositions were cured with W radiation as described in Example 1 with an intensity of 1.92mW/cm² above the web, and 1.50mW/cm² below the web. The total energy used was 371 mJ/cm² above the web and 289 mJ/cm² below the web.

The samples were tested for tensile and elongation and 90° Peel Adhesion. The tensile strength is reported in kiloPascals (kPa) in Table 8. The Peel Adhesion test was performed on ED5100 electro-coated steel with a 20 minute dwell at room temperature. The samples are particularly useful as a weatherable layer in a either a single layer or multi-layer tape construction.

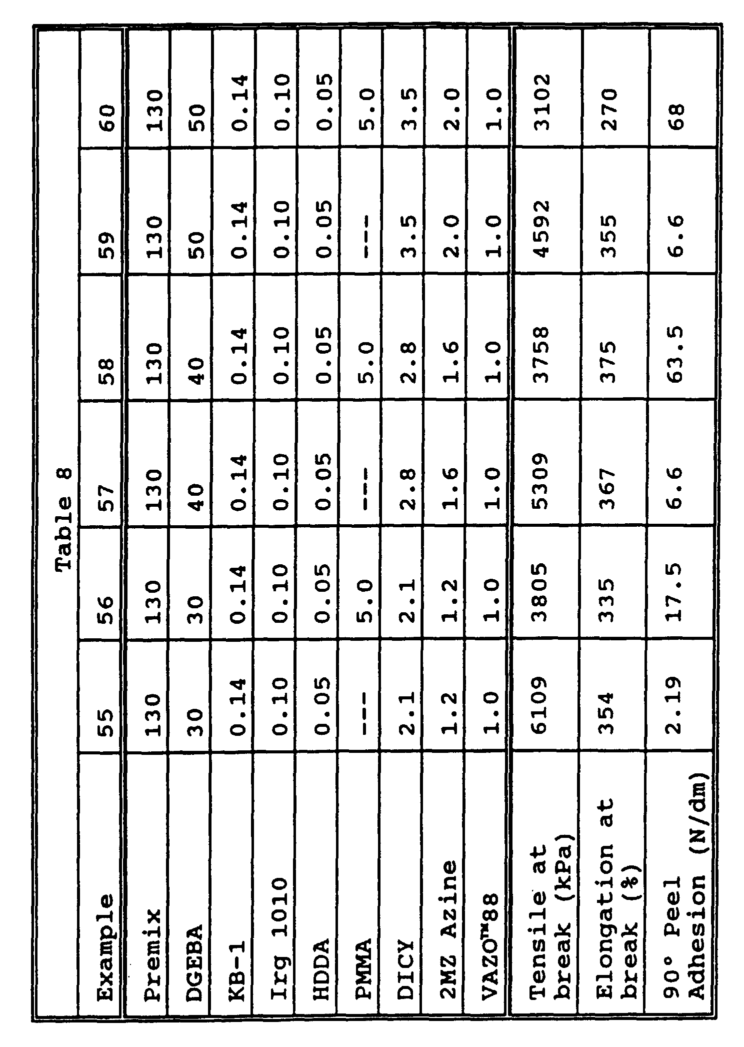

The data in Table 8 show that tapes with compositions containing a polymethylmethacrylate macromer have lower values for tensile strength at break and higher peel adhesion values, which are indications of a reduction in molecular weight of the cured compositions.

### Examples 61 - 65

Styrene macromers were added to the composition of Example 61 in examples 62-65. The compositions for the expandable layer were cured and laminated to polyester film described in Example 24, and a flowable layer as described in Example 54.

A methacrylate-terminated polystyrene macromonomer (Macromer 1) was prepared as follows. A flame dried 5 liter glass, 5 necked flask equipped with a mechanical stirrer, thermometer, gas inlet, condenser, and addition funnel, was purged with argon, and then charged with 2100 grams cyclohexane which had been previously distilled from polystyryl lithium. The cyclohexane was heated to 50°C and 20 ml of a 1.17 molar solution of sec-butyllithium in cyclohexane (23.4 moles) were added to the flask using a syringe. Purified styrene monomer (350 grams) was added in one portion to the flask, resulting in an exothermic reaction. The temperature was maintained at less than 74°C by cooling, and then during the next hour, the reaction was maintained at 50°C. Thereafter, the mixture was cooled to 40°C and ethylene oxide, previously passed over sodium hydroxide, was introduced with vigorous stirring until the red color changed to a faint yellow. The reaction was then quenched with 1.4 gram (23.4 millimoles) of acetic acid. The reaction mixture was saturated with dry air, and 10.9 grams (70.2 millimoles) of 2-isocyanatoethylmethacrylate (obtained from Dow Chemical Company) and 4 drops of tin dioctoate catalyst were added. The resultant mixture was heated to 60°C and maintained at that temperature for 14 hours. The mixture was then cooled and the polymer was precipitated in 30 liters of methanol, dried in vacuo to yield 340 grams of macromonomer having a number average molecular weight of 16,700, and a weight average molecular weight of 18,036.

Macromer 2 was RC13K styrene macromer from Sartomer.

Example 61 was prepared as in Example 1 except that the 50/50 BA/NVC mixture was mixed on a roller mill without heating until a solution was formed. The composition was 80 parts BA, 20 parts NVC, 80 parts DGEOBA (Epon™1001 from Shell Chemical Co.), 20 parts DGEBA, 4.5 parts DICY, 1.0 parts HINP, 0.6 parts VAZO™64, 0.16 parts glycidoxypropyltrimethoxysilane, 4.0 parts C15-250, 2.5 parts silica (Cab-O-Sil M5 from Cabot Corp.), 0.1 part KB-1, 8.0 parts fumed silica (Aerosil R972 from DeGussa), and 0.8 part CBr₄.

In Examples 62-65, the styrene macromonomer was added to a mixture of the acrylate monomers and the epoxy resins and dissolved on a roller mill. The remaining components were dispersed with a high shear mixer. The mixture was then mixed on a roller mill for two days, de-aerated, coated, and cured as described in Example 1. The sheets were coated to a thickness of 0.051 mm. The sheets were tested for stiffness (G') of the sheet before heat curing, and results are shown in Table 9. The sheets were then cured at 177°C for 12 minutes and at 121°C for 20 minutes, cooled to room temperature, and tested for tensile strength (in kiloPascals - kPa) and elongation. Test results are shown in Table 9. A three layer construction was prepared with the flowable layer of Example 54 (about 1.52 mm thick) with the polyester film of Example 24. Initial and final construction thicknesses are shown in Table 9.

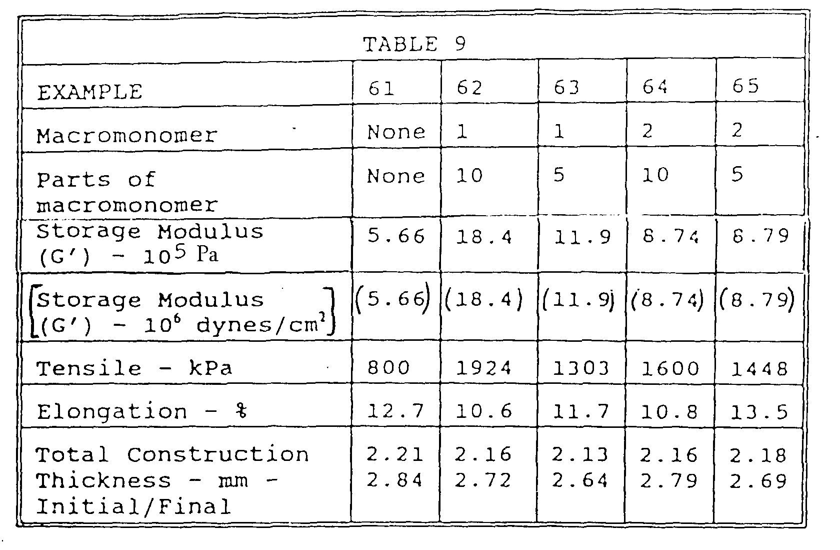

The data in Table 9 show that the addition of copolymerizable macromonomers increases the stiffness and tensile strength of the expandable layer to improve handling while maintaining the desirable flow characteristics.

### Examples 66 - 70

Examples 66 - 70 were prepared using an anhydride curative with a tetramethyl ammonium chloride as the accelerator. A flowable composition was prepared by mixing 30 parts of BA, 20 parts of isobornyl acrylate, 15 parts of Macromonomer 1 (Example 61), 35 parts of DGEOBA (Epon™1001), 0.1 part Irgacure™651 photoinitiator, and 0.2 part CBr₂. The anhydride curative (1,2-cyclohexane dicarboxylic anhydride and accelerator (tetramethyl ammonium chloride were added in the amounts shown in Table 10. The compositions were de-aerated, knife coated to a thickness of 2 mm, and cured as described in Example 1 with an exposure to 650 mJoules of UV radiation. The UV cured samples were then tested for onset temperature, peak exotherm temperature, and exotherm (Joules/gram) and a DuPont Differential Scanning Calorimeter. Results are shown in Table 10. Cut samples were also cured at 177°C for 30 minutes, and all of the samples exhibited good flow properties, i.e., flowed beyond the boundaries of the initial tape. The melt flowable sheets of these examples can be laminated to expandable layers as described above.

**Table 10**

| Example | 66 | 67 | 68 | 69 | 70 |
|---|---|---|---|---|---|
| Parts 1,2-cyclohexane dicarboxylic anhydride | 10 | 20 | 10 | 20 | 15 |
| Parts tetramethyl ammonium chloride | .5 | .5 | 1.5 | 1.5 | 1.0 |
| Onset Temperature - °C | 142 | **135** | 143 | 141 | 139 |
| Peak Temperature - °C | 178 | 180 | 177 | 180 | 176 |
| Exotherm - Joules/gram | 30.4 | 32.6 | 33.6 | 28.7 | 24.3 |

The data in Table 10 show that varying the amount of the curative can change the temperature at which the epoxy component cures, thereby allowing more or less time for the composition to flow before curing.

### Examples 71-74

A composition was prepared having 25 parts of a solution of BA/NNDMA/Butvar™B79 in a ratio of 60/40/30, 5 parts BA, 10 parts DGEBA, 2 parts 1,2-cyclohexane dicarboxylic anhydride, 0.05 part tetramethyl ammonium chloride, 0.05 part HDDA, 0.1 part Irg 1010, 0.40 part Irgacure™651, and 0.15 part glycidoxy propyl trimethoxy silane. Varying amounts of acrylic acid, sodium bicarbonate, and carbon tetrabromide were added as shown in Table 11. The compositions were coated and cured as described in Example 1. After heat curing, the sheets were observed qualitatively for expansion (yes or no), and flow during heat curing (yes or no), and results are reported in Table 11.

**Table 11**

| EXAMPLE | 71 | 72 | 73 | 74 |
|---|---|---|---|---|
| Parts acrylic acid | 0 | 2 | 0 | 1 |
| Parts sodium bicarbonate | 1 | 3 | 1 | 2 |
| Parts CBr₄ | 0 | 0 | .2 | .1 |
| Expansion | yes | no | yes | yes |
| Flow | yes | no | yes | no |

The data in TABLE 11 show that sodium bicarbonate can be used as an expansion agent in the expandable layer, and various amounts of other components can be used to modify the properties as desired.

## Claims

1. A latent, thermosettable, melt-flowable sheet material, having a top surface and a bottom surface, comprising two or more layers, comprising an upper layer and a lower layer, said upper layer comprising a latent, thermosettable, melt-flowable composition, and said lower layer comprising a latent, expandable, thermosettable melt-flowable composition, wherein upon application of said sheet material to a substrate by contacting said lower layer therewith, and heating said lower layer which flows and expands and said upper layer which flows ; and wherein one of said upper and lower layers comprises a copolymerizable macromonomer of formula :
(II) X-(Y)ₙ-Z
wherein
X is a vinyl group copolymerizable with an alkyl acrylate and reinforcing monomers ;
Y is a divalent linking group where n can be zero or one, and
Z is a monovalent polymeric moiety having a Tg greater than 20°C.

2. A latent, thermosettable melt-flowable sheet according to Claim 1, wherein said upper layer comprises a copolymerizable macromonomer.

3. A latent, thermosettable melt-flowable sheet according to Claim 1, wherein said lower layer comprises a copolymerizable macromonomer.

4. A latent, thermosettable melt-flowable sheet according to one of Claims 1 to 3, wherein said copolymerizable macromonomer is a macromonomer which functions as a chain transfer agent.

## Patentansprüche

1. Latentes, wärmehärtbares, in der Schmelze fließfähiges Bahnenmaterial, das eine obere und eine untere Fläche aufweist, umfassend zwei oder mehr Schichten, die eine obere und eine untere Schicht umfassen, wobei die obere Schicht eine latente, wärmehärtbare, in der Schmelze fließfähige Zusammensetzung umfaßt, und die untere Schicht eine latente, ausdehnbare, wärmehärtbare, in der Schmelze fließfähige Zusammensetzung umfaßt, wobei beim Auftragen des Bahnenmaterials auf ein Substrat durch In-Kontakt-Bringen der untere Schicht mit demselben und Erwärmen die unteren Schicht fließt und sich ausdehnt und die obere Schicht fließt; und worin eine der oberen und unteren Schichten ein copolymerisierbares Makromonomer der Formel
(II) X-(Y)ₙ-Z
umfaßt, worin
X eine Vinylgruppe ist, die mit einem Acrylat und Verstärkungsmonomeren copolymerisierbar ist;
Y eine zweiwertige verbindende Gruppe ist, worin n 0 oder 1 sein kann, und
Z ein einwertiger, polymerer Rest ist, der ein T_{g} von größer als 20 °C hat.

2. Latente, wärmehärtbare, in der Schmelze fließfähige Bahn gemäß Anspruch 1, worin die obere Schicht ein copolymerisierbares Makromonomer umfaßt.

3. Latente, wärmehärtbare, in der Schmelze fließfähige Bahn gemäß Anspruch 1, worin die untere Schicht ein copolymerisierbares Makromonomer umfaßt.

4. Latente, wärmehärtbare, in der Schmelze fließfähige Bahn gemäß einem der Ansprüche 1 bis 3, worin das copolymerisierbare Makromonomer ein Makromonomer ist, das als Kettenübertragungsmittel fungiert.

## Revendications

1. Matériau de feuille thermodurcissable, fluide à l'état fondu, latente, ayant une surface de dessus et une surface de dessous, comprenant deux ou plusieurs couches, comprenant une couche supérieure et une couche inférieure, ladite couche supérieure comprenant une composition thermodurcissable, fluide à l'état fondu, latente et ladite couche inférieure comprenant une composition thermodurcissable, fluide à l'état fondu, expansible, latente, dans lequel lors de l'application dudit matériau de feuille à un substrat en mettant en contact ladite couche inférieure avec celui-ci, et du chauffage de ladite couche inférieure qui s'écoule et s'expanse et ladite couche supérieure qui s'écoule; et dans lequel l'une desdites couches supérieure et inférieure comprend un macromonomère copolymérisable de formule:
(II) X-(Y)ₙ-Z
dans laquelle
X est un groupe vinyle copolymérisable avec un acrylate d'alkyle et des monomères de renforcement ; Y est un groupe de liaison divalent où n peut valoir zéro ou un et
Z est une fraction polymère monovalente ayant une Tg supérieure à 70°C.

2. Feuille thermodurcissable, fluide à l'état fondu, latente selon la revendication 1, dans laquelle ladite couche supérieure comprend un macromonomère copolymérisable.

3. Feuille thermodurcissable, fluide à l'état fondu, latente selon la revendication 1, dans laquelle ladite couche inférieure comprend un macromonomère copolymérisable,

4. Feuille thermodurcissable, fluide à l'état fondu, latente selon l'une des revendications 1 à 3, dans laquelle ledit macromonomère copolymérisable est un macromonomère qui agit comme un agent de transfert de chaîne.
